Europäisches Patentamt

European Patent Office

Office européen des brevets

(11) Publication number: **0 190 750 B1**

# EUROPEAN PATENT SPECIFICATION

(45) Date of publication of patent specification: **06.05.92** (51) Int. Cl.⁵: **G01N 27/416**

(21) Application number: **86101518.8**

(22) Date of filing: **06.02.86**

(54) **Air-to-fuel ratio sensor for an automobile.**

(30) Priority: **06.02.85 JP 19982/85**

(43) Date of publication of application:
**13.08.86 Bulletin 86/33**

(45) Publication of the grant of the patent:
**06.05.92 Bulletin 92/19**

(84) Designated Contracting States:
**CH DE FR GB IT LI NL SE**

(56) References cited:
**EP-A- 126 590     EP-A- 0 082 372**
**GB-A- 2 053 488     GB-A- 2 059 645**
**JP-A-15 445 055     JP-A-62 349 155**
**US-A- 4 313 810**

(73) Proprietor: **HITACHI, LTD.**
**6, Kanda Surugadai 4-chome**
**Chiyoda-ku, Tokyo 100(JP)**

(72) Inventor: **Suzuki, Seiko**
**3705, Kanai-cho**
**Hitachiohta-shi Ibaraki-ken(JP)**
Inventor: **Sasayama, Takao**
**7-14-11, Kanesawa-cho**
**Hitachi-shi Ibaraki-ken(JP)**
Inventor: **Miki, Masayuki**
**2643-1, Katsukura**
**Katsuta-shi Ibaraki-ken(JP)**

(74) Representative: **Altenburg, Udo, Dipl.-Phys. et al**
**Patent- und Rechtsanwälte Bardehle-Pagenberg-Dost-Altenburg-Frohwitter & Partner Postfach 86 06 20**
**W-8000 München 86(DE)**

EP 0 190 750 B1

**Description**

Field of the Invention

The present invention relates to a sensor for an air-to-fuel (A/F) ratio control apparatus of an internal combustion engine and, more particularly, to an A/F ratio sensor for an autombile which can detect an A/F ratio in three states, i.e., a rich region, a stoichiometric A/F ratio and a lean region, with a simple structure and high accuracy.

Background of the Invention

It is desirable that an internal combustion engine be operated in a rich region in which an excess air rate $\lambda$ is $\lambda < 1$, at $\lambda = 1$ (a stoichiometric A/F ratio) and in a lean region in which $\lambda > 1$ corresponding to the conditions of the engine; hence it is required that the A/F ratio be detected in a wide range from the rich region to the lean region by a single sensor.

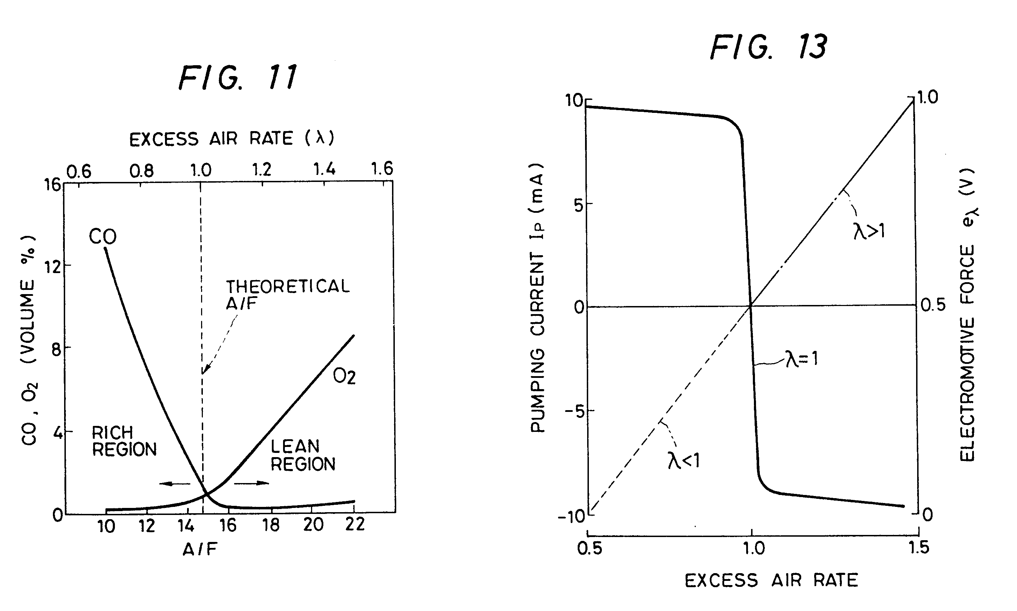

On the other hand, relations between the excess air rate $\lambda$ and a residual oxygen consistency and a carbon monoxide consistency in exhaust gas are as shown in Fig. 11 and in the lean region the oxygen ($O_2$) consistency varies approximately linearly to the A/F ratio and in the rich region the carbon monoxide (CO) consistency varies approximately linearly to the A/F ratio.

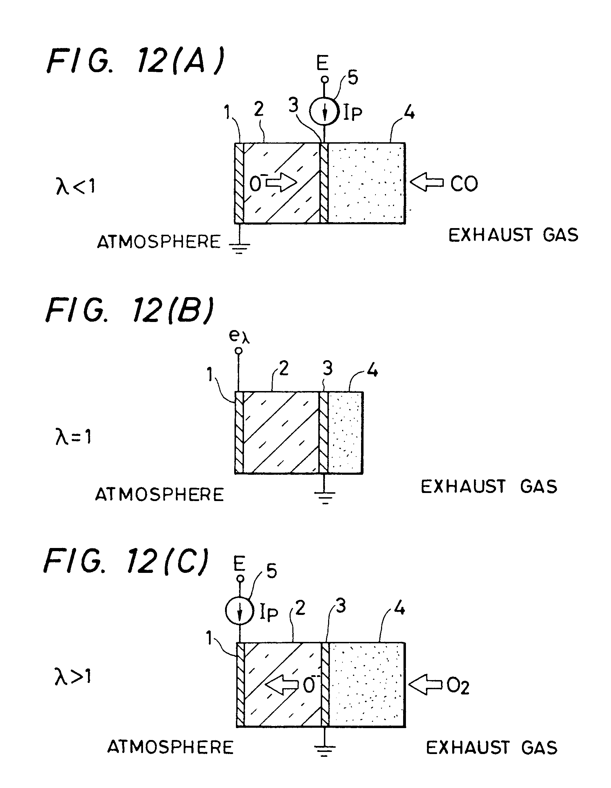

Basic principles of A/F ratio sensors of the prior art which detect the A/F ratio of each region individually by utilizing the residual oxygen consistency and the carbon monoxide consistency are shown in Fig. 12 (A) to (C). The A/F ratio sensor is constituted by an electrode 1, a zirconia solid electrolyte 2, an electrode 3, a protecting film 4 and an ammeter 5.

The sensor shown in Fig. 12 (A) detects the rich region ( $\lambda < 1$ ) by applying an exciting voltage E of approximately 0.5 V between the electrode 1 and the electrode 3 which are a cathode and an anode respectively as known from, for instance, JP-A-66292/1978. The protecting film 4 functions as a gas-diffusion body and the oxygen gas which is subjected to burning reaction with unburnt gas which is diffused into the electrode 3 part through the protecting film 4 is transferred from the electrode 1 part contacting the atmosphere to the electrode 3 apart through the zirconia solid electrolyte 2 in the form of oxygen ions. Therefore, a pumping current Ip measured by the ammeter 5 represents the quantity of the oxygen ions transferred from the electrode 1 to the electrode 3 and corresponds to the quantity of the unburnt gas diffused into the electrode 3 part through the protecting film 4 so that the analog detection of the A/F ratio in the rich region is facilitated by measurement of Ip.

As shown in Fig. 12 (B), when an electromotive force $e_\lambda$ between two electrodes is detected with the potential of the electrode 3 contacting the exhaust gas through the protecting film as reference, because the value of $e_\lambda$ changes incrementally by approximately i V at the stoichiometric A/F ratio, the approximate digital detection of $\lambda = 1$ is facilitated by measurement of $e_\lambda$. This principle is known from, for instance, JP-A-37599/1972.

As shown in Fig. 12 (C), when an exciting voltage of approximately 0.5 V is applied between two electrodes with the electrode 3 as a cathode, the oxygen ions are pumped from the electrode 3 part to the electrode 1 part and the pumping current Ip is measured by the ammeter 5. As this pumping current Ip corresponds to the quantity of the oxygen diffused into the electrode 3 part through the protecting film, the lean region ($\lambda > 1$) can be detected from the Ip value. This principle is known from, for instance, JP-A-69690/1977.

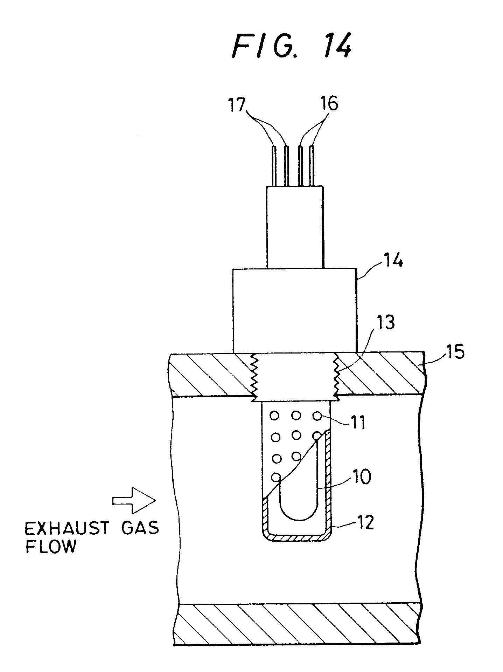

Examples of the characteristics of the sensors of the prior art shown in Fig. 12(A) 40 (C) are shown in Fig. 13. The characteristic in the lean region is shown by a one-dot-chain line, the characteristic in the rich region is shown by a dotted line and the characteristic at the stoichiometric A/F ratio is shown by a solid line. Thus the detection methods which can detect individual regions are known but the constitution with which the A/F ratio is detected smoothly in the wide range by a single method is not proposed yet.

Note that, as the principle of the sensor shown in Fig. 12 (B) is not based upon the speed of diffusion rule, the rate of the gas diffusion resistance of the protecting film 4 of the sensor of Fig. 12(B) is formed to be smaller than those of the sensors of Fig. 12(A) and 12(C). In general, the thickness of the protecting film 4 in the case of Fig. 12 (B) is formed thinner than those in other cases.

An A/F ratio sensor as disclosed in US-A-4 313 810 is known. This sensor is provided with an improved sensing part and has made unnecessary the introduction of air as a reference gas. One of terminals of this sensing part is coupled to one of input terminals of a dual-input amplifier included in a driving part thereof, whereas the other terminal of the sensing part is grounded. A reference voltage is supplied to the other input terminal of the amplifier. With this, the structure of the sensing part became simple but this sensor is intended to control the stoichiometric A/F ratio.

An A/F ratio sensor capable of detecting an A/F ratio ranging over rich and lean regions, including the stoichiometric A/F ratio, is known from GB-A-2 053 488. This document also indicates the feature of exposing one of the electrodes to the atmosphere and the other electrode to the exhaust gas.

A conventional sensor of this type has the problem that a certain output voltage of a sensing part always corresponds to two different A/F ratios, which are in the rich and lean regions respectively, so that it is not possible to identify a particular one A/F ratio on the basis of an output voltage of the sensing part. This problem is caused by the profile of an output voltage curve with respect to A/F ratio in the output characteristics of a sensor. GB-A-2 053 488 seeks to remove this problem by modifying the structure of a sensing part to reform the profile of the output voltage curve. This prior publication, however, fails to disclose anything improved concerning a driving part for detecting an A/F ratio over the wide range. In the prior art of this publication, a driving current of a predetermined value is supplied by a direct current source to two electrodes of a sensing part, and an A/F ratio is detected from a voltage drop across the electrodes. However, there still remains in this prior art a further problem that the flowing direction of the driving current has to be switched over in response to the measuring range of the A/F ratio, i.e., whether in the rich region or in the lean region.

The same kind of technology is also disclosed in JP-A-55-62349 or JP-A-55-154450. In an A/F ratio sensor according to the former Japanese publication, there is used a so called lamination type oxygen concentration cell, which has a lamination consisting of measurement and reference electrodes and an oxygen ion conductive solid electrolyte sandwiched therebetween and in which the reference electrode comes into contact with the atmosphere of gas to be measured through a porous layer. Further, a dc driving current of a specific value is supplied between the electrodes of the sensing part, and an A/F ratio is detected on the basis of the electromotive force appearing thereacross. When a lean A/F ratio is to be measured by this sensor, the driving current is supplied so as to be negative at the reference electrode. Upon measurement of a rich A/F ratio it is supplied so as to be positive at the same electrode. Namely, the polarity of the driving current supplied to the electrodes must be switched over according to the range of an A/F ratio to be measured. This Japanese publication, however, fails to disclose the switch-over of the polarity of a driving current. Therefore, there is no suggestion how to use this sensor for continuous measurement of an A/F ratio ranging over the rich and lean regions, including the stoichiometric A/F ratio, without switching over the polarity of a driving current of a sensing part.

In an A/F ratio sensor according to the latter of the aforesaid two Japanese publications, there is used a sensing part with a special structure such that first and second electrodes sandwich a first solid electrolyte; and said second electrode and a third electrode sandwich a second solid electrolyte. Further, the sensor is provided with a double-pole transfer switch for switching over the polarity of a dc driving current supplied to the second and third Also in this sensor, a rich or lean A/F ratio is detected on the basis of a voltage appearing across the first and second electrodes, while switching over the polarity of the driving current supplied between the second and third electrodes. This Japanese publication, however, fails to disclose how to control the switch-over of the transfer switch. Therefore, it is not suggested how this sensor can be used for continuous measurement of an A/F ratio ranging over the rich and lean regions without switching the polarity of the driving current.

Further, in EP-A-0 082 372, there is disclosed an A/F ratio sensor, in which a circuit for driving a sensing part thereof includes an amplifier with a feed-back resistor. This prior publication relates to an A/F ratio sensor using the same lamination type sensing part as disclosed in the aforesaid JP-A-55-62349 and is directed to the improvement thereof. According to this improvement, the oxygen partial pressure of a reference electrode of a sensing part is prevented from rising excessively and maintained nearly constant even under the varying operational conditions of an engine. With this sensor it is possible to achieve an accurate detection of an A/F ratio continuously. In this prior art sensor, the amplifier with the feed-back resistor in the driving circuit functions as mere transmitting means of intermediate voltage signal in the signal processing, and does not function as means for converting a current signal as an output of a sensing part to a voltage signal.

Object of the Invention

It is an object of the present invention to provide an A/F ratio sensor with a simple structure and high accuracy, in which a potential difference between electrodes of a sensing part is controlled at a predetermined value and an A/F ratio in a rich or lean region and the stoichiometric A/F ratio can be detected on the basis of a current flowing through the sensing part.

Summary of the Invention

The invention is as defined in the accompanying Claim 1 that has been divided into a two-part form on the assumption that US-A-4 313 810 is the nearest prior art. Thus all of the features appearing in the pre-characterizing part of the claim are also to be found in US-A-4 313 810. With the present invention, an A/F ratio sensor which can detect A/F ratios in a wide range of three conditions, a rich region, stoichiometric A/F ratio and a lean region, with a simple constitution and high accuracy can be provided.

Brief Description of the Drawings

Fig. 1 shows a principle constitution of an A/F ratio sensor of the present invention;
Fig. 2 is an electromotive force characteristic diagram describing the principle of the present invention;
Fig. 3 shows a circuit configuration describing one embodiment of an A/F ratio sensor of the present invention;
Fig. 4 shows examples of characteristics of an A/F ratio sensor of the present invention;
Fig. 5 shows examples of V-I characteristics;
Fig. 6 shows the other embodiment of an A/F ratio sensor of the present invention;
Fig. 7 and Fig. 8 show still other embodiments of an A/F ratio sensor of the present invention;
Fig. 9 shows an example of the other characteristic of an A/F ratio sensor of the present invention;
Fig. 10 shows a circuit configuration describing the other embodiment of an A/F ratio sensor of the present invention;
Fig. 11 shows relations between the A/F ratio and exhaust gas consistencies;
Fig. 12 describes a principle of an A/F ratio sensor of the prior art;
Fig. 13 describes characteristics of an A/F ratio sensor of the prior art; and
Fig. 14 shows mounting state of an A/F ratio sensor of the present invention.

Preferred embodiments of the Invention

Embodiments of an A/F ratio sensor of the present invention will be hereinunder described with reference to related drawings.

Fig. 14 shows the mounting state of an A/F ratio sensor of the present invention. A tubular detecting part 10 is provided in a protecting tube 12 which has holes 11 and fixed in a peg 14 and mounted in an exhaust pipe 15 through which exhaust gas is flowing. The reference numeral 16 denotes electrode terminals and the reference numeral 17 denotes heater terminals through which the detecting part 10 is connected to an electronic circuit (not shown). A rod shape heater (such as a tungsten heater mounted in an alumina rod) is mounted in a zirconia solid electrolyte 10 composing a tubular detecting part.

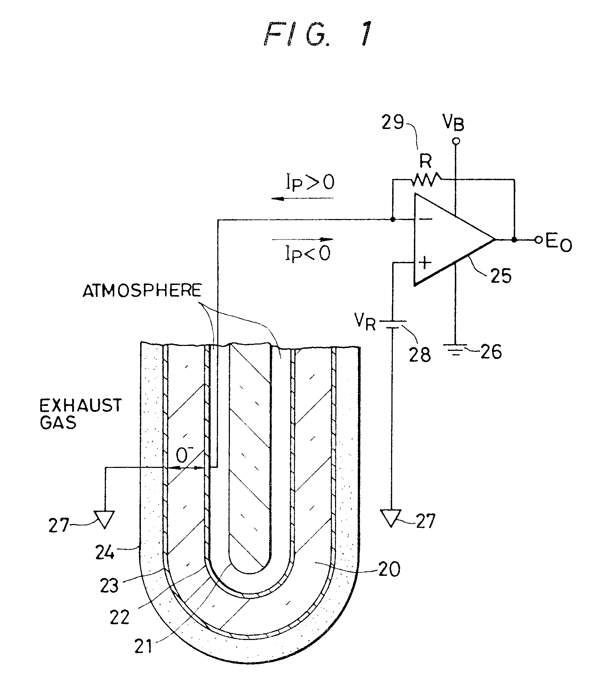

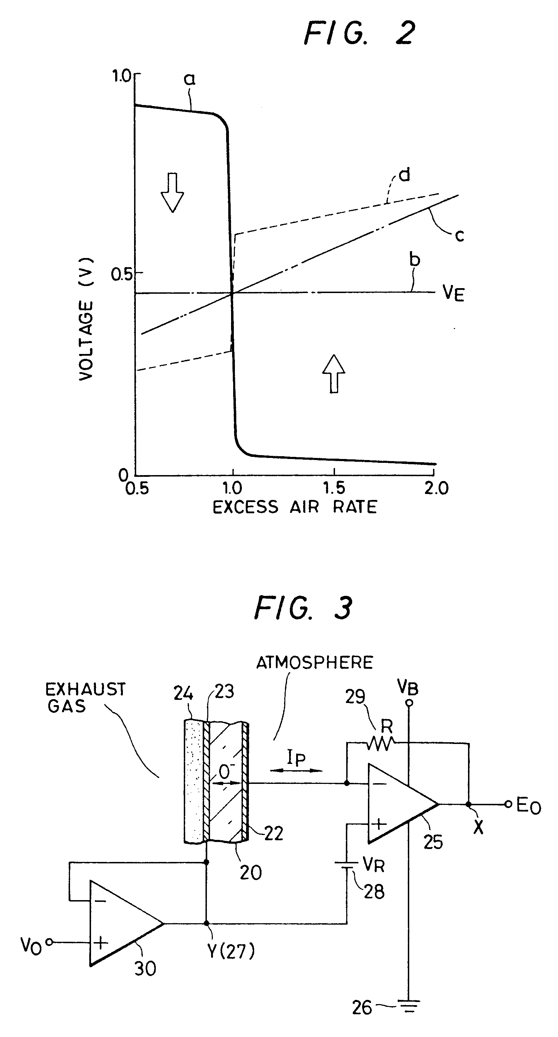

Before describing the embodiments of the present invention, the basic principle of the present invention will be described hereinunder with reference to Fig. 1 and Fig. 2.

A predetermined voltage $V_E$ (for instance 0.45 V) is applied between an electrode on the atmosphere side and an electrode on the exhaust side regardless of an excess air rate $\lambda$ such as shown by an exciting voltage characteristic (b) in Fig. 2 against a characteristic of a curve (a) which changes incrementally stoichiometric A/F ratio ($\lambda = 1$). With this applied voltage, an electromotive force of the curve (a) is decreased in a rich region ($\lambda < 1$) and is increased in a lean region ($\lambda > 1$). The voltage $V_E$ can be applied with a predetermined inclination as shown by characteristic (c) or incrementally as shown by characteristic (d).

Fig. 1 shows a principle constitution of the present invention. The sensor of Fig. 1 is constituted by a detecting part of oxygen consistency and a driving circuit which drives the detecting part. The reference numeral 20 denotes a tubular zirconia solid electrolyte and the atmospheric air is introduced into the electrolyte 20. The reference numeral 21 denotes a rod-shaped heater which heats the zirconia solid electrolyte 20 to at least 600°C to improve conductiveness of oxygen ions. A first electrode 22 is formed on the atmosphere side of the zirconia solid electrolyte 20 and a second electrode 23 is formed on the exhaust side of the zirconia solid electrolyte 20. These electrodes are composed of platinum with thickness of several tens of $\mu$m and made porous. A gas-diffusion body 24 is formed on the surface of the second electrode 23 to suppress gases such as oxygen or carbon monoxide which flow from the exhaust gas atmosphere into the electrode 23 part by diffusion. The gas-diffusion body 24 is formed by plasma spray from a spinner or the like and made porous. In order to make diffusion resistance rate large, the thickness of the gas-diffusion body 24 is several hundreds of $\mu$m and has a thickness several times that of the film in a stoichiometric A/F ratio sensor. The detecting part of the A/F ratio sensor is constituted as described above.

The reference numeral 25 denotes a differential amplifier. The second electrode 23 is connected to a floating ground 27 which has a level higher by a (certain) predetermined voltage than a real ground 26. The first electrode 22 is connected to a (-) side input terminal of the amplifier 25. A voltage source 28 for predetermination of an exciting voltage $V_R$ is inserted between a (+) side input terminal of the amplifier 23 and the floating ground 27. A fixed resistor 29 of resistance R is provided for converting an oxygen pumping current Ip which represents the quantity of oxygen ions flowing through the zirconia solid electrolyte 20 into an output voltage Eo. The driving circuit of the A/F ratio sensor is constituted as described above.

The operation of the A/F ratio sensor of the present invention is hereinunder described.

As the potential of the second electrode 23 is lower than the potential of the first electrode 22 by $V_R$ in the lean region, oxygen molecules in the second electrode 23 part are converted into oxygen ions ($O^{--}$) in the electrode part by the exciting voltage $V_R$ and transferred to the first electrode 22 part through the zirconia solid electrolyte 20 by an operation of oxygen pump. Then the oxygen ions are again neutralized in the electrode part and discharged into the atmosphere. At that time, a positive pump current Ip (reverse direction to $O^{--}$ flow) is applied in the circuit and the output voltage Eo is changed.

As the pumping current Ip, wherein Ip > 0, corresponds to the quantity of oxygen flowing from the exhaust gas atmosphere into the second electrode 23 part through the gas-diffusion body 24 by diffusion, the following equation is effected:

$$Ip = K(\lambda - 1) \qquad (1)$$

wherein $\lambda$ is an excess air rate and K is a proportionality constant.

Therefore, if an electrical potential of the potential ground is Vo, as the output voltage Eo of the A/F ratio sensor is,

$$Eo = V_R + Vo + IpR \qquad (2)$$

then from equations (1) and (2),

$$Eo = V_R + Vo + K(\lambda - 1)R \qquad (3)$$

At the stoichiometric A/F ratio ($\lambda = 1$), the ratio of the residual oxygen and the residual unburnt gas such as carbon monoxide in the exhaust gas flowing into the second electrode 23 part through the gas-diffusion body is the ratio of the chemical equivalents and both of them are completely burnt by catalysis of the second electrode. As the oxygen is eliminated in the second electrode 23 part, even if a voltage is applied between the first electrode 22 and the second electrode 23, no oxygen ion is transferred through the zirconia solid electrolyte 20. Therefore, the pumping current in the electronic circuit becomes zero (Ip = 0).

At that time, from the equation (3), the output voltage Eo is,

$$Eo = V_R + Vo \qquad (4)$$

which is a constant value determined only by circuit constants. As the equation (4) is independent of Ip, the output voltage Eo at $\lambda = 1$ is a highly reliable value.

In the rich region, as the electromotive force between two electrodes is reduced to the level of the exciting voltage as described in Fig. 2, the oxygen ions flow from the first electrode 22 part into the second electrode 23 part through the zirconia solid electrolyte 20, or flow in the opposite direction to the case of the lean region. The oxygen ion flow increases oxygen consistency in the second electrode 23 part. The oxygen ions are again neutralized in the second electrode 23 part to be converted into oxygen molecules and are burnt with the unburnt gas such as carbon monoxide which flows the exhaust gas atmosphere into the second electrode 23 part through the gas-diffusion body 24.

Therefore, the quantity of the oxygen ions transferred from the first electrode 22 part to the second electrode 23 part through the zirconia solid electrolyte 20 corresponds to the quantity of the unburnt gas flowing into the second electrode 23 part by diffusion. At that time, the pumping current in the electronic circuit is Ip < 0.

As there is a certain relation between the consistency of the unburnt gas such as carbon monoxide and the excess air rate λ as shown in Fig. 11, equations (1)40(3) are effective in the rich region too, except that in the lean region, as λ > 1, then Ip > 0 and in the rich region, as λ < 1, then Ip < 0.

Then one embodiment of a driving circuit of an A/F ratio sensor of the present invention is hereinunder described with reference to Fig. 3. The same parts as in Fig. 1 are denoted by the same reference numerals as in Fig. 1.

The second electrode 23 is connected to the potential ground 27 (point Y) and controlled at a constant potential Vo by an amplifier 30. The potential of the first electrode 22 is controlled to be (Vo + $V_R$) by an amplifier 25. Therefore, the potential difference between the first electrode 22 and the second electrode 23, or the exciting voltage $V_E$ is,

$$V_E = (Vo + V_R) - Vo = V_R \qquad (5)$$

and is controlled at a constant value regardless of the excess air rate λ.

In the lean region, the pumping current Ip flows from a point X to the real ground 26 through the resistor 29 → the zirconia solid electrolyte 20 → the floating ground point Y → the amplifier 30.

In the rich region, the pumping current Ip flows from the floating ground point Y to the real ground 26 through the zirconia solid electrolyte 20 → the resistor 29 → the point X → the amplifier 25.

At the stoichiometric A/F ratio (λ = 1), in the sensor Ip = 0 as the principle, the output voltage Eo becomes ($V_R$ + Vo) as given by the equation (4).

Thus, with the embodiment of an A/F ratio sensor of the present invention three conditions, i. e. λ<1, λ = 1 and λ > 1 can be detected continuously without switching the polarities between two electrodes and with a single source circuit.

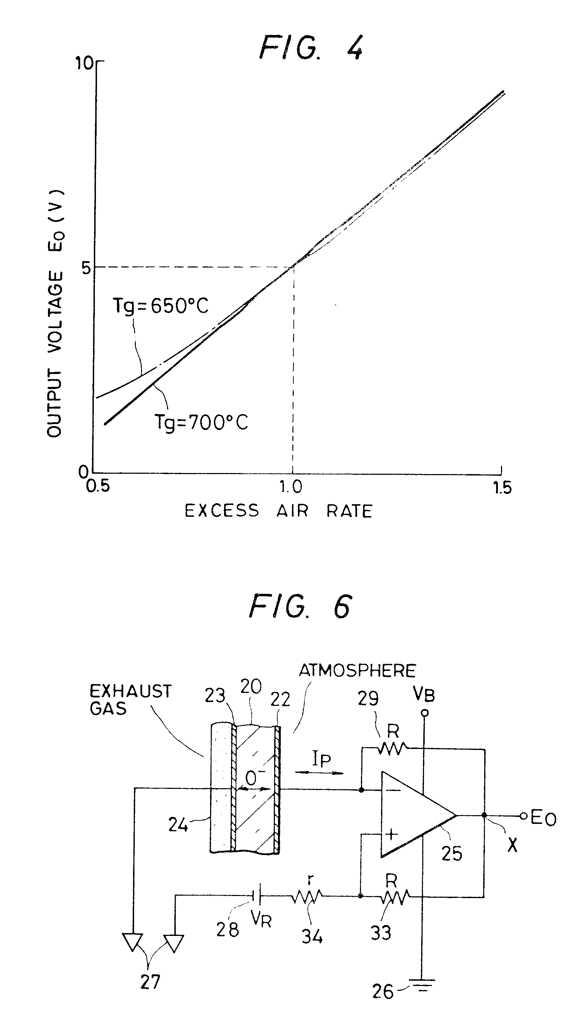

Examples of the results obtained by the measurement with the constitution of the embodiment of the present invention shown in Fig. 3 are shown in Fig. 4. Fig. 4 shows the measured results when Vo = 4.55 V and $V_R$ = 0.45 V. As shown by a solid line in the diagram, the A/F ratio can be detected in the wide range from the rich region to the lean region continuously. It was also, confirmed that the output voltage Eo at the stoichiometric A/F ratio (λ = 1) was Vo + $V_R$ = 5 V which was predicted from the principle.

With this embodiment, the A/F ratio in the whole regions can be detected linearly and with high accuracy and smooth feed-back control A/F ratio is facilitated in accordance with the conditions of an engine and a far more excellent control system in terms of exhaust gas countermeasure and fuel economy, compared to systems of the prior art, can be provided. Especially, significant improvement of fuel efficiency can be expected by that engine control in the lean region is facilitated and that linear feed-back control in the rich region is facilitated.

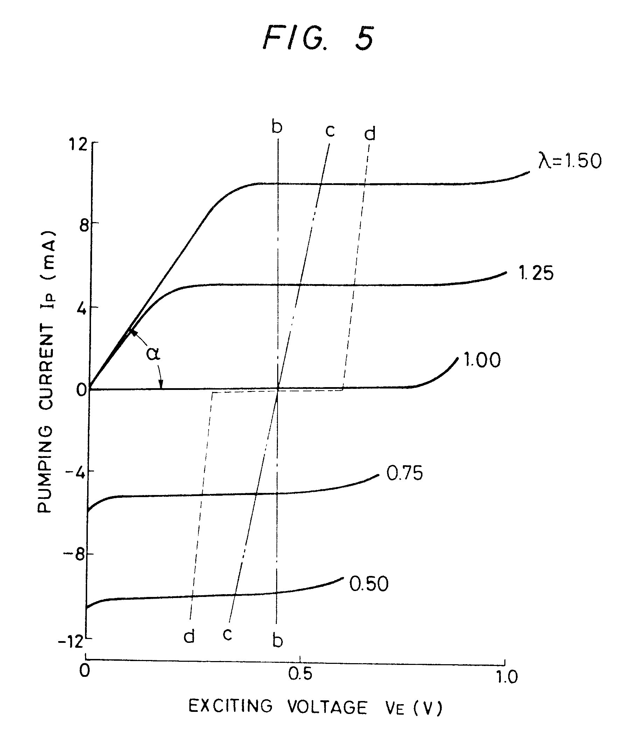

V-I characteristics of the sensor detecting part are shown in Fig. 5.

As shown in the diagram, a pumping current Ip shows a certain saturated value at a certain exciting voltage. By measuring the saturated current value, the excess air rate λ can be detected. If the exciting voltage $V_E$ goes higher, the pumping current Ip shows a higher value than the saturated value. This phenomenon is caused by a shift of the conduction mechanism in the zirconia solid electrolyte 20 from ion conduction to electron conduction. The smaller the excess air rate, the lower the exciting voltage $V_E$ at which shift to the electron conduction occurs.

In the region of λ > 1, the pumping current Ip > 0 and corresponds to the quantity of oxygen flowing into the second electrode 23 part by diffusion through the gas diffusion body 24. In the region of λ < 1, the pumping current Ip < 0 and corresponds to the quantity of unburnt gas such as carbon monoxide flowing into the second electrode 23 part by diffusion through the gas-diffusion body 24. Fig. 5 shows V-I characteristics when the temperature Tg of the zirconia solid electrolyte is 700° C.

If the saturated current Ip corresponding to each excess air rate can be detected, the A/F ratio can be detected linearly in the wide range from the rich region to the lean region. As understood from the V-I characteristics shown in Fig. 5, these saturated current values can be measured by predetermining the characteristic (b), the characteristic (c) or the characteristic (d) as the exciting voltage characteristic to the excess air rate.

If the exciting voltage characteristic is (b), measurement of the saturated current near λ = 0.5 and λ = 1.5 is difficult. This problem is solved by converting the exciting characteristic into (c), or preferably (d).

As internal resistance of the zirconia solid electrolyte increases when the temperature decreases, the region of the V-I characteristic α becomes narrow. Therefore, measurement of the saturated current tends to be difficult at the low temperature. This tendency is the most noticeable with the characteristic (b). To solve the problem, the zirconia solid electrolyte must be heated to high temperature by a heater. It is recommended to heat the zirconia solid electrolyte with the heater to a temperature not less than approximately 750°C, 700°C and 670°C when the exciting voltage characteristic is (b), (c) and (d) respectively. Taking the power consumption and the durability of the heater into account, the characteristic (c) is preferred to (b) and (d) is preferred to (c).

These exciting voltage characteristics (b) (c) and (d) correspond to the characteristics (b) (c) and (d) shown in Fig. 2 respectively.

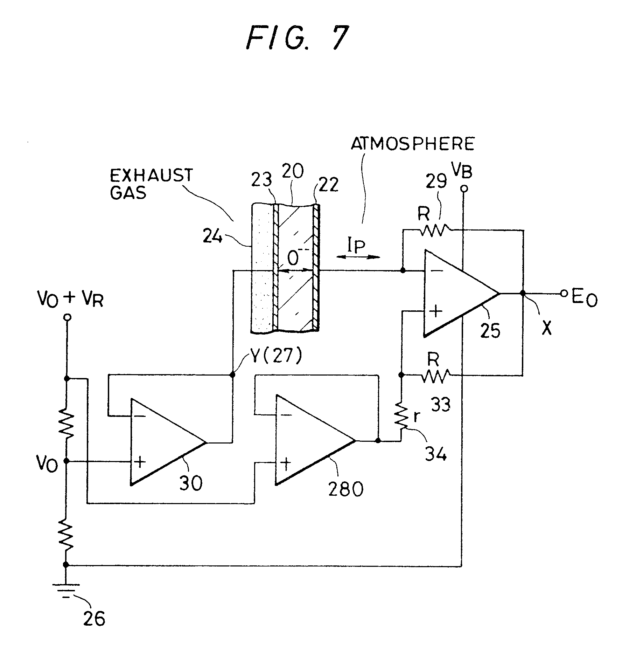

Fig. 6 shows one embodiment of the present invention with which the exciting voltage characteristic (c) shown in Fig. 2 is obtained, wherein a resistor 33 and resistor 34 are inserted between the source 29 and the point X of the configuration given by Fig. 3. As a result, a potential difference rIp is produced in the resistor 34 part in accordance with the output voltage Eo changed by the pumping current Ip and the potential difference between the first electrode 22 and the second electrode 23, or the exciting voltage between two electrodes, is changed by this value. If the resistance (r) of the resistor 34 is predetermined to be close to the internal resistance of the zirconia solid electrolyte 20, the output voltage Eo of the A/F ratio sensor is less influenced by the temperature of the exhaust gas. As the potential difference rIp is changed not only by the resistance (r) but also by the pumping current Ip, it is automatically changed by the excess air race λ and the potential difference between two electrodes or the exciting voltage $V_E$ shows the characteristic (c) shown in Fig. 2. With this constitution, temperature dependency of the oxygen ion conduction rate in the zirconia solid electrolyte is improved.

An embodiment other than shown in Fig. 6 is shown in Fig. 7. An amplifier 280 has the same function as the source 28 in Fig. 3. With this circuit configuration, even if the temperature Tg of the zirconia solid electrolyte 20 is 650°C, the output characteristic is identical to that of the solid line in Fig. 4. Therefore, this configuration is also effective as a countermeasure against the influence of temperature.

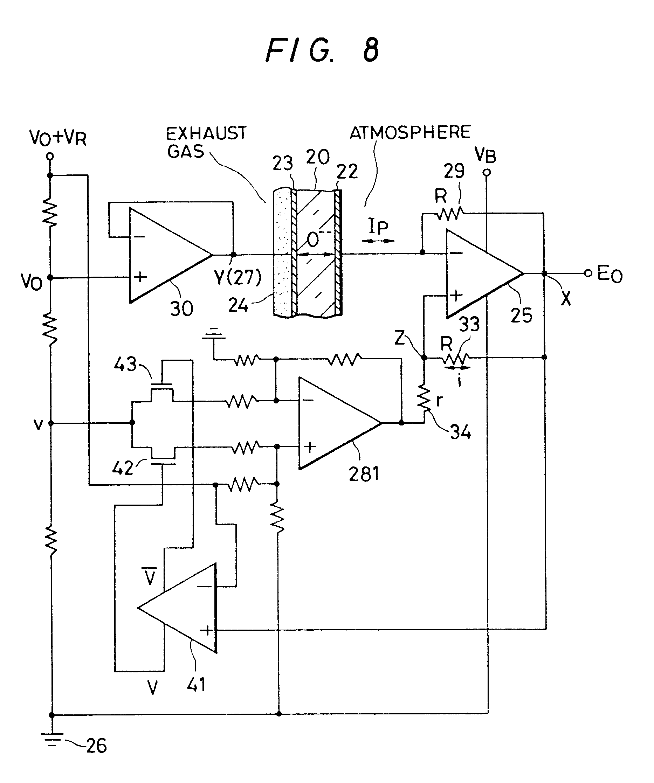

Fig. 8 shows one embodiment of the present invention with which the exciting voltage characteristic (d) shown in Fig. 2 is obtained, wherein basically an amplifier 281 for addition and subtraction, a dual-output comparator 41 and switches 42 and 43 are added to the configuration of Fig. 7. The switches 42 and 43 are driven by output signals V and $\overline{V}$ of the dual-output comparator 41 which are reversed at the instance of the pumping current Ip = 0 and a voltage (V) is supplied to a (+) side input terminal and a (-) side input terminal of the amplifier 281 for addition and subtraction alternately. Taking V* as a potential at the (+) side input terminal part Z of the amplifier 25 and (i) as the current in the resistor 33 part.

$$V^* = V_O + V_R + v + ri \quad \text{at } \lambda > 1 \left.\vphantom{\begin{matrix}a\\b\end{matrix}}\right\}$$
$$V^* = V_O + V_R - v + ri \quad \text{at } \lambda < 1 \left.\vphantom{\begin{matrix}a\\b\end{matrix}}\right\} \quad \ldots (6)$$

With such circuit configuration, the exciting voltage characteristic between two electrodes as given by the characteristic (d) in Fig. 2 can be obtained. Therefore, it is easily understood from the V-I characteristics shown in Fig. 5 that this exciting voltage characteristic (d) is suitable for detecting the saturated pumping current Ip corresponding to each excess air rate λ.

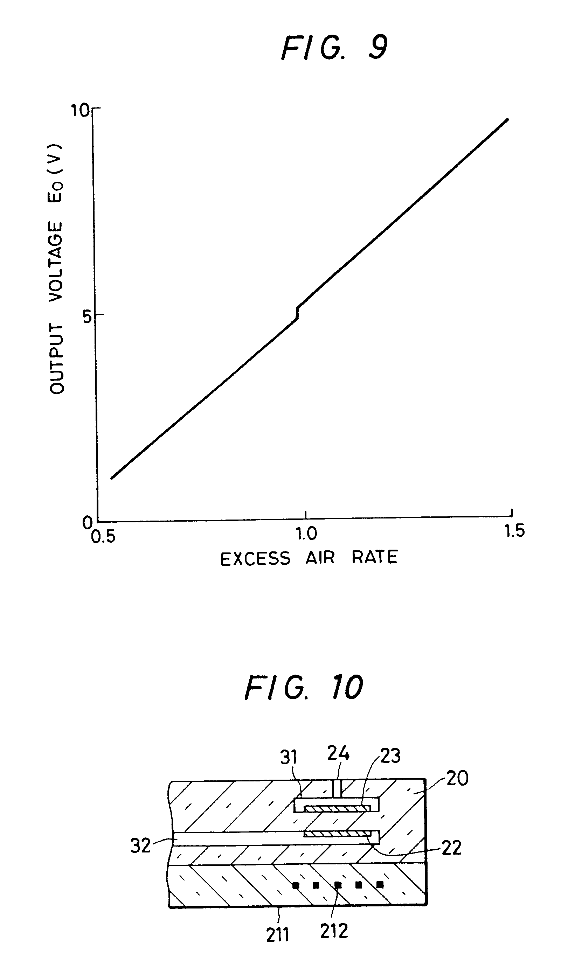

One example of the obtained result measured by the circuit configuration of Fig. 8 is shown in Fig. 9. This diagram shows the measured result when v = 0.15 V. In this case, as shown in the diagram, the output voltage Eo changes in step by 0,2 V at the stoichiometric A/F ratio, λ = 1.

The stepping change of 0,2V is not a substantial problem in this embodiment and, if 0,2V is added to the characteristic shown in Fig. 2 in the region of λ ≦ 1, the characteristic of the output voltage Eo becomes linear in all regions.

With the constitution of this embodiment, an effect can be obtained which limits the decline of accuracy caused by the deterioration of the electrode (increase of interfacial resistance).

It is to be noted that, although the form of the zirconia solid electrolyte of the detecting part of the A/F ratio sensor is described as tubular in the above description, it is not to be construed as limiting the scope of the invention. In other words, any structure such as a flat plate type shown in Fig. 10 with which the ambient atmosphere can be introduced into the first electrode part may be accepted.

Fig. 10 shows a detecting part, wherein a zirconia solid electrolyte is a flat plate and a gas diffusion body consists of, for instance, one hole.

In Fig. 10, the same reference numerals as in Fig. 1 denote the parts which have the same function as in Fig. 1. The atmospheric air is introduced into the first electrode 22 part through a passage 32. Residual oxygen and unburnt gas in the exhaust gas flow into the second electrode 23 part in a diffusion chamber 31 by diffusion through a tubular gas-diffusion body 24. The zirconia solid electrolyte 20 is heated and controlled to a high temperature (for instance 600°C) at which the oxygen ion conduction rate is high.

**Claims**

1. An air-to-fuel ratio sensor for detecting the ratio of air-to-fuel of fuel mixture supplied to an internal combustion engine, comprising:

a detecting part including a zirconia solid electrolyte (20), a first and a second electrode (22, 23) provided one on each side of the solid electrolyte (20), a gas-diffusion body (24) formed on the second electrode (23) to permit exhaust gases from the engine to contact the second electrode (23) therethrough, and

a driving circuit (25 to 30; 33, 34; 280; 281, 41 to 43) for supplying an exciting voltage ($V_R$) to the detecting part, said driving circuit including an amplifier (25) with an output terminal, from which a detection output signal (Eo) representative of the air-to-fuel ratio is delivered, and two input terminals, one of which is coupled to the first electrode (22), there being electric potential means (27, 28, 30; 33, 34; 280; 281, 41 to 43) which apply the exciting voltage to the other input terminal of the amplifier (25) and a predetermined electric potential to the second electrode (23)

**characterized in that**
a) the first electrode (22) is provided on the solid electrolyte (20) so as to be exposed to atmosphere,
b) the amplifier (25) is provided with a resistor (29) connected between the output terminal of the amplifier (25) and the one input terminal thereof, whereby the exciting voltage ($V_R$) of the detecting part is subjected to feed-back control, and
c) the electric potential means (27, 28, 30; 33, 34; 280; 281, 41 to 43) comprise means (27, 30) for maintaining the predetermined electric potential at the second electrode (23) at a constant level (Vo) which is higher than ground level (26) of the driving circuit

2. An air-to-fuel ratio sensor as claimed in Claim 1, characterized in that the exciting voltage is controlled to be always constant.

3. An air-to-fuel ratio sensor as claimed in Claim 1, characterized in that said electric potential means further includes two resistors (33, 34) provided in series between the electric potential means (28) and the output of the amplifier (25), the connection between said two resistors (33,34) also being connected to the other input of the amplifier, for producing a potential difference according to the detection output signal, the voltage drop across one (34) of the resistors (33, 34) connecting said potential means (28) to said other input of the amplifier being combined with said exciting voltage and applied to the other input terminal of the amplifier (25), whereby the exciting voltage is changed in accordance with the quantity of oxygen ions moving through the solid electrolyte (20).

4. An air-to-fuel ratio sensor as claimed in Claim 3, characterized in that the resistance of the one resistor (34) is determined to be close to the internal resistance of the solid electrolyte (20).

5. An air-to-fuel ratio sensor as claimed in Claim 1, characterized in that the electric potential means further includes a dual-output comparator (41) and switches (42, 43) for correcting said exciting voltage by adding or subtracting a desired voltage to or from said exciting voltage in response to the detection output signal, whereby the exciting voltage is changed stepwise when an air-to-fuel ratio is equal to the stoichiometric value thereof.

**Revendications**

1. Détecteur de rapport air-carburant pour la détection du rapport air-carburant d'un mélange combustible envoyé à un moteur à combustion interne, comprenant :

une partie de détection comprenant un électrolyte solide formé de zircone (20), des première et seconde électrodes (22,23) prévues de chaque côté de l'électrolyte solide (20), un corps (24) de diffusion de gaz formé sur la seconde électrode (23) pour permettre, aux gaz d'échappement provenant du moteur de venir, à travers lui, en contact avec la seconde électrode (23), et

un circuit d'excitation (25 à 30; 33, 34; 280; 281, 41 à 43) pour l'envoi d'une tension d'excitation (V$_R$) à la partie de détection, ledit circuit d'excitation comprenant un amplificateur (25) possédant une borne de sortie, qui délivre un signal de sortie de détection (Eo) représentatif du rapport air-carburant, et deux bornes d'entrée dont l'une est couplée à la première électrode (22), des moyens (27,28,30;33,34;280;281,41 à 43) délivrant un potentiel électrique étant prévus pour appliquer la tension d'excitation à l'autre borne d'entrée de l'amplificateur (25) et un potentiel électrique prédéterminé à la seconde électrode (23),

caractérisé en ce que

a) la première électrode (22) est disposée sur l'électrolyte solide (20) de manière à être exposée à l'atmosphère,

b) l'amplificateur (25) comporte une résistance (29) branchée entre la borne de sortie de l'amplificateur (25) et l'une de ses bornes d'entrée, la tension d'excitation (V$_R$) de la partie de détection étant soumise à une commande par réaction, et

c) les moyens (27,28,30;33,34;280;281,41 à 43) délivrant le potentiel électrique comprenant des moyens (27,30) pour maintenir le potentiel électrique prédéterminé sur la seconde électrode (23) à un niveau constant (Vo), qui est supérieur au niveau de masse (26) du circuit de commande.

2. Détecteur de rapport air-carburant selon la revendication 1, caractérisé en ce que la tension d'excitation est commandée de manière à être en permanence constante.

3. Détecteur de rapport air-carburant selon la revendication 1, caractérisé en ce que lesdits moyens délivrant un potentiel électrique comprennent en outre deux résistances (33,34) branchées en série entre les moyens (28) délivrant le potentiel électrique et la sortie de l'amplificateur (25), la liaison entre les deux résistances (33,34) étant également raccordée à l'autre entrée de l'amplificateur, pour la production d'une différence de potentiel correspondant au signal de sortie de détection, la chute de tension aux bornes de l'une (34) des résistances (33,34) raccordant lesdits moyens (28) de délivrance du potentiel à ladite autre entrée de l'amplificateur étant combinée à ladite tension d'excitation et appliquée à l'autre borne d'entrée de l'amplificateur (25), la tension d'excitation étant modifiée en fonction de la quantité d'ions oxygène circulant dans l'électrolyte solide (20).

4. Détecteur de rapport air-carburant selon la revendication 3, caractérisé en ce que la valeur résistive de la résistance (34) est déterminée comme étant proche de la valeur résistive interne de l'électrolyte solide (20).

5. Détecteur de rapport air-carburant selon la revendication 1, caractérisé en ce que les moyens délivrant le potentiel électrique comprennent en outre un comparateur à deux sorties (41) et des interrupteurs (42,43) pour corriger ladite tension d'excitation par l'addition d'une tension désirée à ladite tension d'excitation ou sa soustraction de cette tension, en réponse au signal de sortie de détection, la tension d'excitation étant modifiée pas-à-pas lorsque le rapport air-carburant est égal à sa valeur stoéchiométrique.

**Patentansprüche**

1. Sensor für ein Luft-zu-Brennstoff-Verhältnis zum Erfassen des Verhältnisses von Luft zu Brennstoff einer Brennstoffmischung, die einer Verbrennungsmaschine zugeführt wird, der aufweist:

einen Erfassungsteil, der einen Feststoffelektrolyten (20) aus Zirkonium(di)oxid enthält, eine erste und eine zweite Elektrode (22, 23), von denen eine an jeder Seite des Feststoffelektrolyten (20) vorgesehen ist, einen Gasdiffusionskörper (24), der an der zweiten Elektrode (23) ausgebildet ist, um Abgasen aus der Maschine zu erlauben, die zweite Elektrode (23) dahindurch zu kontaktieren, und

EP 0 190 750 B1

einen Antriebsschaltkreis (25 bis 30; 33, 34; 280; 281, 41 bis 43) zum Anlegen einer Erregerspannung (V_R) an den Erfassungsteil, wobei der Antriebsschaltkreis einen Verstärker (25) mit einem Ausgangsanschluß enthält, von dem ein Detektions-Ausgabesignal (Eo) geliefert wird, das das Luft-zu-Brennstoff-Verhältnis repräsentiert, und zwei Eingangsanschlüssen, von denen einer mit der ersten Elektrode (22) gekoppelt ist, wobei es Einrichtungen für elektrisches Potential (27, 28, 30; 33, 34; 280; 281, 41 bis 43) gibt, die die Erregerspannung an den anderen Eingangsanschluß des Verstärkers (25) anlegen und ein vorbestimmtes elektrisches Potential an die zweite Elektrode (23),

**dadurch gekennzeichnet,** daß
a) die erste Elektrode (22) an dem Festkörperelektrolyten (20) vorgesehen ist, um der Atmosphäre ausgesetzt zu sein,
b) der Verstärker (25) mit einem Resistor (29) versehen ist, der zwischen dem Ausgangsanschluß des Verstärkers (25) und dem einen Eingangsanschluß davon angeschlossen ist, wodurch die Erregerspannung (V_R) des Erfassungsteils einer Rückkoppelsteuerung ausgesetzt ist, und
c) die Einrichtungen für elektrisches Potential (27, 28, 30; 33, 34; 280; 281, 41 bis 43) eine Einrichtung (27, 30) umfassen zum Halten des vorbestimmten elektrischen Potentials an der zweiten Elektrode (23) auf einem konstanten Pegel (Vo), der höher als der Erdungspegel (26) des Antriebsschaltkreises ist.

2. Sensor für ein Luft-zu-Brennstoff-Verhältnis nach Anspruch 1, dadurch gekennzeichnet, daß die Erregerspannung gesteuert wird, immer konstant zu sein.

3. Sensor für ein Luft-zu-Brennstoff-Verhältnis nach Anspruch 1, dadurch gekennzeichnet, daß die Einrichtung für elektrisches Potential weiterhin zwei Resistoren (33, 34) enthält, die seriell zwischen der Einrichtung für elektrisches Potential (28) und dem Ausgang des Verstärkers (25) vorgesehen sind, wobei der Anschluß zwischen den zwei Resistoren (33, 34) auch an dem anderen Eingang des Verstärkers angeschlossen ist, und zwar zum Erzeugen einer Potentialdifferenz gemäß dem Erfassungs-Ausgabesignal, wobei der Spannungsabfall über einem (34) der Resistoren (33, 34), die die Potentialeinrichtung (28) mit dem anderen Eingang des Verstärkers verbinden, mit der Erregerspannung kombiniert ist und an den anderen Eingangsanschluß des Verstärkers (25) angelegt ist, wodurch die Erregerspannung in Übereinstimmung mit der Quantität von Sauerstoffionen geändert wird, die sich durch den Festkörperelektrolyten (20) bewegen.

4. Sensor für ein Luft-zu-Brennstoff-Verhältnis nach Anspruch 3, dadurch gekennzeichnet, daß der Widerstand des einen Resistors (34) bestimmt ist, dem inneren Widerstand des Festkörperelektrolyten (20) nahe zu sein.

5. Sensor für ein Luft-zu-Brennstoff-Verhältnis nach Anspruch 1, dadurch gekennzeichnet, daß die Einrichtung für elektrisches Potential weiterhin enthält: einen Komparator (41) mit zwei Ansgängen und Schalter (42, 43) zum Korrigieren der Erregerspannung durch Hinzufügen oder Subtrahieren einer erwünschten Spannung zu oder von der Erregerspannung in Antwort auf das Erfassungs-Ausgabesignal, wodurch die Erregerspannung schrittweise geändert wird, wenn ein Luft-zu-Brennstoff-Verhältnis gleich dem stöchiometrischen Wert davon ist.

# FIG. 1

$I_P > 0$

$I_P < 0$

ATMOSPHERE

EXHAUST
GAS

$O^-$

$V_B$

$R$

$29$

$E_O$

$25$

$V_R$

$28$

$26$

$27$

$27$

$24$

$23$

$22$

$21$

$20$

# FIG. 2

# FIG. 3

## FIG. 4

## FIG. 6

FIG. 5

# FIG. 7

# FIG. 8

## FIG. 9

OUTPUT VOLTAGE E₀ (V) vs EXCESS AIR RATE

## FIG. 10

FIG. 13

FIG. 11

18

# FIG. 12(A)

$\lambda < 1$

E
5
1 2 3 IP 4

$O^-$ ⟹   ⟸ CO

ATMOSPHERE

EXHAUST GAS

# FIG. 12(B)

$\lambda = 1$

$e\lambda$

1 2 3 4

ATMOSPHERE

EXHAUST GAS

# FIG. 12(C)

$\lambda > 1$

E
5
IP 2 3 4
1

⟸ $O^-$   ⟸ $O_2$

ATMOSPHERE

EXHAUST GAS

# FIG. 14

EXHAUST GAS
FLOW